(19) Europäisches Patentamt / European Patent Office / Office européen des brevets

(11) **EP 4 265 565 A1**

(12) **EUROPEAN PATENT APPLICATION**

(43) Date of publication:
**25.10.2023 Bulletin 2023/43**

(21) Application number: **22204092.5**

(22) Date of filing: **27.10.2022**

(51) International Patent Classification (IPC):
$C01B\ 21/064$ (2006.01)   $C04B\ 35/565$ (2006.01)
$C04B\ 35/58$ (2006.01)   $C04B\ 35/581$ (2006.01)
$C04B\ 35/584$ (2006.01)   $C01G\ 1/12$ (2006.01)
$C09C\ 1/28$ (2006.01)   $C09C\ 1/36$ (2006.01)
$C09C\ 1/40$ (2006.01)   $C09C\ 3/00$ (2006.01)
$C09C\ 3/06$ (2006.01)   $C09C\ 3/08$ (2006.01)
$B01J\ 3/00$ (2006.01)

(52) Cooperative Patent Classification (CPC):
C01G 1/12; B01J 3/00; C01B 21/0648;
C04B 35/565; C04B 35/58; C04B 35/581;
C04B 35/584; C09C 1/28; C09C 1/36; C09C 1/40;
C09C 3/006; C09C 3/063; C09C 3/08;
C01P 2002/72; C01P 2002/82;          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.04.2022   JP 2022070422**

(71) Applicant: **Super Nano Design Co.,Ltd
Sendai-shi Miyagi, 980-8579 (JP)**

(72) Inventors:
• **Ajiri, Tadafumi
  Sendai-shi, Miyagi, 980-8577 (JP)**
• **Noguchi, Takio
  Sendai-shi, 980-8579 (JP)**

(74) Representative: **Hoffmann Eitle
Patent- und Rechtsanwälte PartmbB
Arabellastraße 30
81925 München (DE)**

(54) **METHOD FOR PRODUCING ORGANICALLY MODIFIED INORGANIC FINE PARTICLE AND ORGANICALLY MODIFIED INORGANIC FINE PARTICLE**

(57)   The present invention enables organically modifying a starting particle with a variety of molecular structures, such as AlN, TiN, $Si_3N_4$, or SiC, uniformly on the entire surface of the starting particle using a common method to easily provide an organically modified inorganic fine particle with further improved dispersibility in a solvent.

The present invention is a method for producing an organically modified inorganic fine particle. The method includes: forming an oxide layer, an oxyhydroxide layer, and/or a hydroxide layer on a surface of at least one or more kinds of starting particle selected from inorganic nitrides, inorganic carbides, inorganic sulfides, and insoluble salts; and organically modifying the starting particle, on which the oxide layer, the oxyhydroxide layer, and/or the hydroxide layer is formed, in a reaction field of a supercritical, subcritical, or gas phase aqueous solvent to obtain an organically modified inorganic fine particle.

FIG. 5

IR spectra of fine particles obtained by organic modification

EP 4 265 565 A1

(52) Cooperative Patent Classification (CPC): (Cont.)
 C01P 2002/85; C01P 2004/03; C01P 2004/61;
 C01P 2004/62; C01P 2004/64; C01P 2006/11;
 C01P 2006/12; C04B 2235/386; Y02P 20/54

**Description**

TECHNICAL FIELD

This invention relates to a method for producing an organically modified inorganic fine particle and to an organically modified inorganic fine particle.

BACKGROUND ART

Fine particles, especially nanometer-sized particles (nanoparticles), exhibit a variety of unique and superior characteristics, properties, and functions, and are expected to enable technologies that satisfy the requirements for all materials and products to be more precise, smaller, and lighter than the current ones. Thus, the nanoparticles are attracting attention as enabling high functionality, high performance, high density, and high precision in industrial and manufacturing materials such as nanostructure modification materials for ceramics, optical function coating materials, electromagnetic wave shielding materials, secondary battery materials, fluorescent materials, electronic component materials, magnetic recording materials, and abrasive materials; as well as in pharmaceutical and cosmetic materials. Recent basic research on nanoparticles has also led to a series of discoveries of ultra-high functionality, the expression of new physical properties, and the synthesis of new materials due to the quantum size effect of the nanoparticles, which have attracted great interest from the industrial world. However, for practical use of the nanoparticles, it is necessary to add unique functions to each fine particle, and for this purpose, it is required to establish a technology to modify the surface of the particles to enable the addition of the functions. Examples of the convenient ways to add the functions which can be used and utilized stably to the fine particles, especially the nanoparticles, include an organic modification, and in particular, modification via a strong bond.

Since fine particles have various useful properties and functions, many synthetic methods including supercritical synthesis have been proposed and developed. There is also a need for a method to collect the synthesized fine particles and nanoparticles, and a method to keep them dispersed and stabilized as fine particles without agglomeration after collection. In addition, when the particles are used, it is necessary to disperse them well in a resin, a plastic, or a solvent. In particular, nanoparticles synthesized in water often have a hydrophilic surface and are not easily collected from the water. In addition, the nanoparticles are not compatible with an organic solvent or a resin.

To satisfy these needs, it is considered necessary to modify the surface of the nanoparticles with an organic substance according to the respective purposes. For example, desirable examples of the modification include a modification by a polymer similar to a resin, and a modification by imparting the same functional group as the solvent. If it is possible to perform surface modification in water, it becomes easier to separate and collect the nanoparticles from water. However, to modify the surface of the nanoparticles synthesized in water with an organic substance, the water and the organic substance preferably form a homogeneous phase, in which case the modifiers used are limited to amphiphilic surfactants or low-grade alcohols which can also be dissolved in water. Moreover, even if the nanoparticles are collected by some method, the collected nanoparticles are also extremely easily aggregated, and if once aggregated, they are difficult to be redispersed even with a dispersing agent. It is also difficult to modify the surface of these nanoparticles.

It is known that a homogeneous phase of water and an organic substance is formed in a high-temperature high-pressure field. For example, it is known that dehydration reactions between an alcohol and a sugar, between a carboxylic acid and an alcohol, and between a carboxylic acid and an amine occur with no catalyst in high-temperature high-pressure water.

It has been reported that when a metal oxide particle is synthesized under the coexistence of an organic substance in a hydrothermal synthesis field under a high-temperature high-pressure condition, a homogeneous phase reaction between the surface of the particle and the organic substance occurs to obtain a fine particle with surface modification in which the organic substance is strongly bonded to the particle surface (Patent Document 1). It has also been reported that since the obtained fine particle is organically modified, the particle can be easily collected by phase separation from water together with a residual organic substance after cooling (Patent Document 1).

PRIOR ART DOCUMENT

PATENT DOCUMENT

Patent Document 1: JP 3,925,932 B

SUMMARY OF THE INVENTION

PROBLEM TO BE SOLVED BY THE INVENTION

By the way, in recent years, there has been a demand for technologies that enable organic modification of a wide variety of particles, and the surface of AlN, TiN, $Si_3N_4$, SiC, and the like is required to be organically modified.

In the process, there is a hydroxyl group on the surface of the starting particle in water, and it is affected due to hydrolysis. Therefore, it is desirable to provide a technology that enables the organic modification uniformly on the entire surface of the fine particle with suppressing the effect of hydrolysis.

The present invention has been made because of these problems, and enables organically modifying a starting particle with a variety of molecular structures, such as AlN, TiN, $Si_3N_4$, or SiC, uniformly on the entire surface of the starting particle using a common method to easily provide an organically modified inorganic fine particle with further improved dispersibility in a solvent.

MEANS OF SOLVING THE PROBLEM

As a result of the inventor's diligent research, they have found that the entire surface of the fine particle is organically modified uniformly by forming an oxide layer on the surface of a starting particle selected from inorganic nitrides, inorganic carbides, inorganic sulfides, and insoluble salts, and by organically modifying the starting particle through the oxide layer. Specifically, the present invention provides the following.

The invention according to a first embodiment provides a method for producing an organically modified inorganic fine particle, comprising: forming an oxide layer, an oxyhydroxide layer, and/or a hydroxide layer on a surface of at least one or more kinds of starting particle selected from inorganic nitrides, inorganic carbides, inorganic sulfides, and insoluble salts; and organically modifying the starting particle, on which the oxide layer, the oxyhydroxide layer, and/or the hydroxide layer is formed, in a reaction field of a supercritical, subcritical, or gas phase aqueous solvent to obtain an organically modified inorganic fine particle.

When the oxide layer is formed, since the starting particle is placed under a high temperature, the nitrogen component in the inorganic nitride becomes a gas such as nitrogen monoxide or nitrogen dioxide, while the inorganic component does not become a gas but remains as an inorganic oxide. Similarly, the carbon component in the inorganic carbide becomes a gas such as carbon monoxide or carbon dioxide, while the inorganic component does not become a gas but remains as an inorganic oxide. Also, the sulfur component in the inorganic sulfide becomes a gas such as sulfur dioxide or sulfur trioxide, while the inorganic component does not become a gas but remains as an inorganic oxide. Examples of the insoluble salt include phosphates and sulfates, and similarly, the inorganic component remains as an inorganic oxide. Therefore, it is possible to form an oxide layer uniformly on the entire surface of the starting particle, not limited to the molecular end.

In general, hydroxyl groups exist on the surface of the starting particle, on which an oxide layer or the like was formed on the surface, in water. For example, when the starting particle is a metal oxide, hydroxyl groups exist on the surface of the starting particle due to the following reaction equilibrium.

$$MO + H_2O = M(OH) \qquad (1)$$

In general, this reaction is exothermic and the equilibrium shifts to the left side at a high temperature. In addition, the reaction due to the surface modifier used is as follows and is due to dehydration.

The reaction to the left direction (reverse reaction) is a well-known reaction in the hydrolysis of an alkoxide or the like, and easily occurs by adding water even near room temperature. Since this reverse reaction is generally exothermic, it is suppressed at a higher temperature, which makes the reaction to the right direction more easily occur. This is similar to the temperature dependence of the dehydration reaction of the metal hydroxide in formula (1).

In the reaction to the right direction (dehydration), since the polarity of the product is lower than that of the original reaction system, the lower polarity of the solvent leads to higher stability of the product in water. The dielectric constant of water is lower at a higher temperature. The dielectric constant drops sharply like that the dielectric constant is 15 or lower at 350°C or lower and that the dielectric constant is about 1 to 10, particularly at around the critical point or higher. This accelerates the dehydration reaction beyond the normal temperature effect.

$$M(OH) + ROH = M(OR) + H_2O = M\ R + 2H_2O$$

$$M(OH) + RCOOH = M(OCOR) + H_2O = MR + H_2O + CO_2$$

$$M(OH) + RCHO = M(OH)CR + H_2O = MC = R + 2H_2O, MCR + 2H_2O, MR + H_2 + CO_2$$

$$M(OH) + RSH = MSR + H_2O \qquad \text{(reduction)}$$

These formulae are referred to as (2).

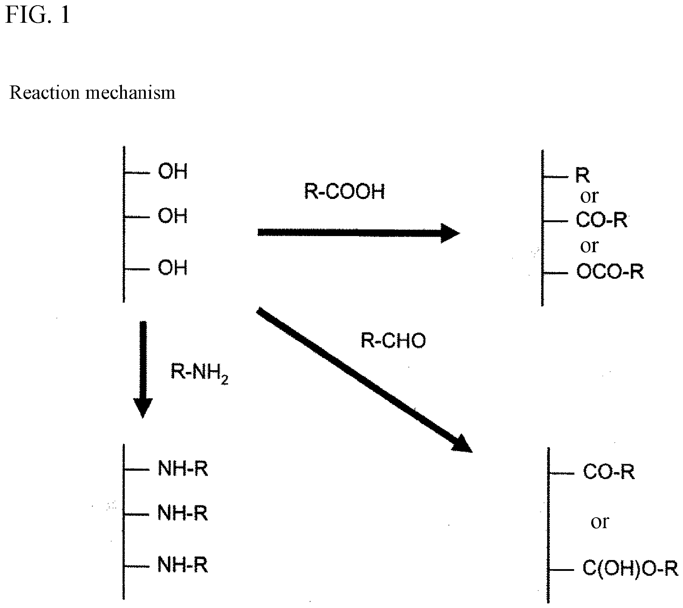

The attack of the hydroxyl group by an amine is known to proceed near room temperature in the presence of a strong acid or via substitution with Cl, while the exchange with OH occurs in water under a high-temperature high-pressure condition. As for an organic substance, we have confirmed that an amination of hexanol proceeds between hexanamide and hexanol with a carboxylic acid as a catalyst, and it is assumed that a similar reaction has occurred. The reaction mechanism of the present method is shown schematically in FIG. 1, taking a part of it as an example.

In the case of a thiol, the possibility of reduction in the reaction field has been reported, and it is assumed that the thiol is partially reduced on the surface of the metal oxide, resulting in a thiol addition reaction.

As mentioned above, the temperature dependences of the formation of a hydroxyl group on the surface of the metal oxide in formula (1) and the organic modification reaction in formulae (2) are in opposite directions. Therefore, especially when the reaction in formula (1) is in the left direction, i.e., dehydration, it is extremely important and sometimes difficult to set the reaction condition such as the coexistence of an acid, to occur the modification reaction.

In contrast, the organic modification in a reaction field of a supercritical, subcritical, or gas phase aqueous solvent is a method that makes it possible.

For example, if the inorganic component is aluminum, a hydrothermal synthesis which is an example of the reaction field proceeds by the following reaction pathway.

$$Al(NO_3)_3 + 3H_2O = Al(OH)_3 + 3HNO_3$$

$$nAl(OH)_3 = nAlO(OH) + nH_2O$$

$$nAlO(OH) = n/2Al_2O_3 + n/2H_2O$$

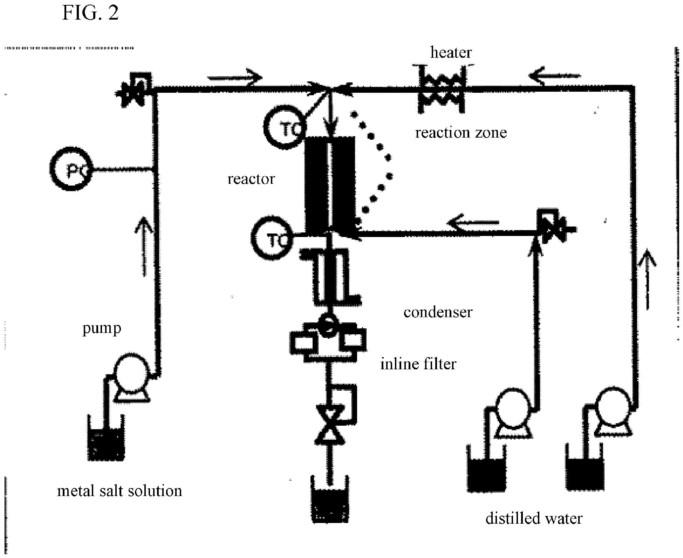

The proceeding of this reaction pathway is the same when another kind of metal, a sulfate, a hydrochloride, or the like is used. Further, when the hydrothermal synthesis is performed using high-temperature high-pressure water as the reaction field with the equipment shown in FIG. 2, for example, a particle having a finer diameter can be produced as shown in FIG. 2. Therefore, the invention according to a first embodiment makes it possible to obtain a finer organic modified particle.

As shown here, even if hydroxyl groups are finally desorbed from the surface by the dehydration reaction, many hydroxyl groups are formed in the product as a reaction precursor or on the surface thereof. If an organic modifier coexists in this reaction field, it is possible to make the reaction occur under a condition where hydroxyl groups are present.

Therefore, the invention according to a first embodiment makes it possible to organically modify a starting particle with a variety of molecular structures, such as AlN, TiN, $Si_3N_4$, or SiC, uniformly on the entire surface of the starting particle using a common method to obtain an organically modified inorganic fine particle, whereby an organically modified inorganic fine particle with further improved dispersibility in a solvent is easily provided.

The invention according to a second embodiment provides an organically modified inorganic fine particle, comprising: an inorganic fine particle; an oxide layer, an oxyhydroxide layer, and/or a hydroxide layer formed on a surface of the inorganic fine particle; and a hydrophobic group organically modifying the surface of the inorganic fine particle via the oxide layer, the oxyhydroxide layer, and/or the hydroxide layer; wherein at least one or more atoms selected from nitrogen, carbon, sulfur, and phosphorus are detected by elemental analysis.

The invention according to a second embodiment makes it possible to realize further improved dispersibility in a solvent because the fine particle with a variety of molecular structures, such as AlN, TiN, $Si_3N_4$, or SiC, is organically modified uniformly on the entire surface of the fine particle.

The invention according to a third embodiment is within the invention according to a second embodiment, and provides an organically modified inorganic fine particle, wherein the oxide layer, the oxyhydroxide layer, and/or the hydroxide layer has a thickness of 1 atomic layer or more and 100 nm or less.

Since the thickness of the oxide layer is 1 atomic layer or more in the invention according to a third embodiment, the invention makes it possible to provide a fine particle that is organically modified uniformly not only at the molecular end but also on the entire surface of the fine particle. In addition, since the thickness of the oxide layer is 100 nm or less, it is possible to provide a fine particle having the original physical properties of the inorganic component. For example, when the inorganic component is a metal component, it is possible to provide a fine particle having a thermal conductivity of the metal component.

The invention according to a fourth embodiment is within the invention according to a second or third embodiment, and provides an organically modified inorganic fine particle, wherein molecules organically modifying the surface of the inorganic fine particle cover 1% or more of the surface of the inorganic fine particle.

Since the molecules for organic modification cover 1% or more of the surface in the invention according to a fourth embodiment, the invention makes it possible to provide an organically modified inorganic fine particle with a more tightly controlled state of the exposed surface of the fine particle.

EFFECT OF THE INVENTION

The invention makes it possible to organically modify a starting particle with a variety of molecular structures, such as AlN, TiN, $Si_3N_4$, or SiC, uniformly on the entire surface of the starting particle using a common method to obtain an organically modified inorganic fine particle, whereby an organically modified inorganic fine particle with further improved dispersibility in a solvent is easily provided.

BRIEF DESCRIPTION OF DRAWINGS

FIG. 1 is a schematic diagram showing the mechanism of the modification reaction in the invention according to the present embodiment.
FIG. 2 is an example of the reaction equipment used for the organic modification in the invention according to the present embodiment.
FIG. 3 shows the states of the AlN particles before and after the oxidation treatment, in which the upper sections show SEM images and the lower sections show oxygen mapping.
FIG. 4 shows the elemental spectra of the AlN particles before and after the oxidation treatment.
FIG. 5 shows the IR spectra of the organically modified AlN fine particles obtained in Example 1 and Comparative Example 1.
FIG. 6 shows the states of the TiN particles before and after the oxidation treatment, in which the upper sections show SEM images and the lower sections show oxygen mapping.
FIG. 7 shows the elemental spectra of the TiN particles before and after the oxidation treatment.
FIG. 8 shows the IR spectra of the organically modified TiN fine particles obtained in Example 2 and Comparative Example 2.
FIG. 9 shows the states of the $Si_3N_4$ particles before and after the oxidation treatment, in which the upper sections show SEM images and the lower sections show oxygen mapping.
FIG. 10 shows the elemental spectra of the $Si_3N_4$ particles before and after the oxidation treatment.
FIG. 11 shows the IR spectra of the organically modified $Si_3N_4$ fine particles obtained in Example 3 and Comparative Example 3.
FIG. 12 shows the states of the SiC particles (primary average particle diameter: 2 to 3 $\mu$m) before and after the oxidation treatment, in which the upper sections show SEM images and the lower sections show oxygen mapping.
FIG. 13 shows the elemental spectra of the SiC particles (primary average particle diameter: 2 to 3 $\mu$m) before and after the oxidation treatment.
FIG. 14 shows the IR spectra of the organically modified SiC fine particles obtained in Example 4-1 and Comparative Example 4-1.
FIG. 15 shows the states of the SiC particles (primary average particle diameter: $\leq$ 38 $\mu$m) before and after the oxidation treatment, in which the upper sections show SEM images and the lower sections show oxygen mapping.
FIG. 16 shows the elemental spectra of the SiC particles (primary average particle diameter: $\leq$ 38 $\mu$m) before and after the oxidation treatment.
FIG. 17 shows the IR spectra of the organically modified SiC fine particles obtained in Example 4-2 and Comparative Example 4-2.
FIG. 18 shows the FT-IR spectrum data of BN particles before and after oxidation treatment.
FIG. 19 shows the X-ray diffraction data of BN particles before and after oxidation treatment.
FIG. 20 shows the FT-IR spectrum data of the organically modified BN fine particles obtained in Example 5A.
FIG. 21 shows the FT-IR spectrum data of the organically modified BN fine particles obtained in Example 5B.

MODE FOR CARRYING OUT THE INVENTION

Specific embodiments of the present invention are described in detail below. However, the present invention is not limited to the following embodiments, but can be conducted with a modification as appropriate within the scope of the purpose of the present invention.

«Production method for organically modified inorganic fine particle»

The method described in the present embodiment includes a formation process of an oxide layer or the like, in which an oxide layer, an oxyhydroxide layer, and/or a hydroxide layer is formed on a surface of a starting particle (raw material particle), and an organic modification process, in which the starting particle on which the oxide layer or the like is formed is organically modified in a reaction field of a supercritical aqueous solvent or the like.

<Formation process of oxide layer or the like>

The formation process of an oxide layer or the like is a process for forming an oxide layer, an oxyhydroxide layer, and/or a hydroxide layer on a surface of at least one or more kinds of starting particle selected from inorganic nitrides, inorganic carbides, inorganic sulfides, and insoluble salts.

[Starting particle]

The starting particle is selected from inorganic nitrides, inorganic carbides, inorganic sulfides, and insoluble salts.

(Inorganic nitride)

Any suitable inorganic nitride can be used as an inorganic nitride to the extent that the effect of the present invention is not impaired. Examples of the inorganic nitride include, for example, aluminum nitride, titanium nitride, boron nitride, carbon nitride, and gallium nitride. Only one kind or two or more kinds of the inorganic nitride may be used.

(Inorganic carbide)

Any suitable inorganic carbide can be used as an inorganic carbide to the extent that the effect of the present invention is not impaired. Examples of the inorganic carbide include, for example, silicon carbide, tungsten carbide, and calcium carbide. Only one kind or two or more kinds of the inorganic carbide may be used.

(Inorganic sulfide)

Any suitable inorganic sulfide can be used as an inorganic sulfide to the extent that the effect of the present invention is not impaired. Examples of the inorganic sulfide include, for example, copper sulfide, zinc sulfide, and cadmium sulfide. Only one kind or two or more kinds of the inorganic sulfide may be used.

(Insoluble salt)

Any suitable insoluble salt can be used as an insoluble salt to the extent that the effect of the present invention is not impaired. The insoluble salt is preferably a metal-containing salt that is insoluble in an organic solvent, and examples of the insoluble salt include, for example, metal phosphates such as lithium iron phosphate and metal sulfates.

(Inorganic component)

The kind of the inorganic component is not particularly limited. However, according to the method described in the present embodiment, the inorganic component is preferably a metal or a semi-metal, or an alloy of these, from the viewpoint of not impairing the thermal conductivity of the resulting fine particle.

(Average particle diameter)

The upper limit of the average primary particle diameter of the starting particle is not particularly limited. However, from the viewpoint of maximizing the surface area exposed to the reactant (contact possibility), the diameter is preferably 10 $\mu$m or less, is more preferably 1 $\mu$m or less, further preferably 100 nm or less, and is furthermore preferably 50 nm or less.
The lower limit of the average primary particle diameter of the starting particle is not particularly limited.

[Formation of oxide layer or the like]

(Formation of oxide layer)

The oxide layer is formed by high-temperature oxidation in air. Since the starting particle is placed under a high temperature, if the starting particle is an inorganic nitride, the nitrogen component in the inorganic nitride becomes a gas such as nitrogen monoxide or nitrogen dioxide, while the inorganic component does not become a gas but remains as an inorganic oxide. Similarly, the carbon component of the inorganic carbide becomes a gas such as carbon monoxide or carbon dioxide, while the inorganic component does not become a gas but remains as an inorganic oxide. Also, the sulfur component of the inorganic sulfide becomes a gas such as sulfur dioxide or sulfur trioxide, while the inorganic component does not become a gas but remains as an inorganic oxide. Examples of the insoluble salt include phosphates and sulfates, and similarly, the inorganic component remains as an inorganic oxide. Therefore, it is possible to form an oxide layer uniformly on the entire surface of the starting particle, not limited to the molecular end.

The heating temperature for oxidizing the starting particle is not particularly limited. However, from the viewpoint of uniformly and evenly oxidizing the surface, the heating temperature is preferably 600°C or higher, and is more preferably 800°C or higher.

The heating time is not particularly limited. However, from the viewpoint of uniformly and unevenly oxidizing the surface, the heating time is preferably 1 hour or more, and is more preferably 2 hours or more. In order not to impair the original physical properties of the inorganic component, the heating time is preferably 24 hours or less, and is more preferably 12 hours or less.

(Formation of oxyhydroxide layer)

The oxyhydroxide layer is formed by high-temperature oxidation with a small amount of water vapor. Since the starting particle is placed under a high temperature, if the starting particle is an inorganic nitride, the nitrogen component in the inorganic nitride becomes a gas such as nitrogen monoxide or nitrogen dioxide, while the inorganic component does not become a gas but remains as an inorganic oxyhydroxide. Similarly, the carbon component of the inorganic carbide becomes a gas such as carbon monoxide or carbon dioxide, while the inorganic component does not become a gas but remains as an inorganic oxyhydroxide. Also, the sulfur component of the inorganic sulfide becomes a gas such as sulfur dioxide or sulfur trioxide, while the inorganic component does not become a gas but remains as an inorganic oxyhydroxide. Examples of the insoluble salt include phosphates and sulfates, and similarly, the inorganic component remains as an inorganic oxyhydroxide. Therefore, it is possible to form an oxyhydroxide layer uniformly on the entire surface of the starting particle, not limited to the molecular end.

(Formation of hydroxide layer)

The hydroxide layer is formed by hydrothermal treatment of an inorganic particle. Since the starting particle is placed under a high temperature, if the starting particle is an inorganic nitride, the nitrogen component in the inorganic nitride becomes a gas such as nitrogen monoxide or nitrogen dioxide, while the inorganic component does not become a gas but remains as an inorganic hydroxide. Similarly, the carbon component in the inorganic carbide becomes a gas such as carbon monoxide or carbon dioxide, while the inorganic component does not become a gas but remains as an inorganic hydroxide. Also, the sulfur component in the inorganic sulfide becomes a gas such as sulfur dioxide or sulfur trioxide, while the inorganic component does not become a gas but remains as an inorganic hydroxide. Examples of the insoluble salt include phosphates and sulfates, and similarly, the inorganic component remains as an inorganic hydroxide. Therefore, it is possible to form a hydroxide layer uniformly on the entire surface of the starting particle, not limited to the molecular end.

(Thickness of oxide layer or the like)

The lower limit of the thickness of the oxide layer or the like is not particularly limited. However, from the viewpoint of enabling uniform organic modification on the entire surface of the starting particle, not limited to the molecular end, the thickness of the oxide layer or the like is preferably 1 atomic layer or more, is more preferably 5 atomic layers or more, and is further preferably 10 atomic layers or more.

The upper limit of the thickness of the oxide layer or the like is not particularly limited. However, in order not to impair the original physical properties of the inorganic component, the thickness of the oxide layer or the like is preferably 100 nm or less, is more preferably 50 nm or less, is further preferably 30 nm or less, is furthermore preferably 10 nm or less, and is particularly preferably 5 nm or less.

The thickness of the oxide layer or the like can be evaluated from the result of energy dispersive X-ray spectroscopy (EDX), X-ray photoelectron spectroscopy (XPS), or X-ray diffraction (XRD). EDX or XPS is preferable. For example, in the case of EDX, the penetration depth of the electron beam can be varied by changing the acceleration voltage. It can also be varied depending on the material.

If the penetration depth L is sufficiently deep compared to the primary average particle diameter d, the elemental ratio can be evaluated from the signals for each element in total signals and the thickness δ of the oxide layer or the like can be evaluated from the result. In the present invention, the thickness δ of the oxide layer or the like is evaluated by the following method.

For example, considering the case in which an AlN particle having a primary average particle diameter of d is used as a core, and the surface of the particle is oxidized, the AlN particle can be approximated as a sphere having a diameter of d, and the oxide layer or the like on the surface can be approximated as a layer having a thickness of δ which is formed on the surface of the sphere.

Therefore, the mole number of Al is approximated by the following equation:

$$\text{(the density of AlN)} \times \text{(the volume of the sphere having a diameter of d)} \times \text{(the molecular weight of AlN)} \times 1$$

$$+ \text{(the density of Al}_2\text{O}_3\text{)} \times \text{(the surface area of the sphere having a diameter of d)} \times \text{(the thickness } \delta \text{ of the oxide layer or the like)} \times \text{(the molecular weight of Al}_2\text{O}_3\text{)} \times 2$$

$$= \text{(the density of AlN)} \times \pi d^3/6/\text{(the molecular weight of AlN)} \times 1$$

$$+ \text{(the density of Al}_2\text{O}_3\text{)} \times \pi d^2 \times \delta/\text{(the molecular weight of Al}_2\text{O}_3\text{)} \times 2$$

Also, the mole number of O is approximated by the following equation:

$$\text{(the density of Al}_2\text{O}_3\text{)} \times \text{(the surface area of the sphere having a diameter of d)} \times \text{(the thickness } \delta \text{ of the oxide layer or the like)} \times \text{(the molecular weight of Al}_2\text{O}_3\text{)} \times 3$$

$$= \text{(the density of Al}_2\text{O}_3\text{)} \times \pi d^2 \times \delta/\text{(the molecular weight of Al}_2\text{O}_3\text{)} \times 3$$

Then, the thickness δ of the oxide layer or the like can be evaluated by the Al:O value obtained from the EDX information.

On the other hand, if the primary average particle diameter d is sufficiently large compared to the penetration depth L, the electron beam is penetrated up to about 1 μm. Therefore, the particle is approximated as an abbreviated flat plate, the upper phase of which is the oxide layer or the like (e.g., $Al_2O_3$, $SiO_2$, etc.) having a thickness of δ and the lower phase of which is the raw material layer (e.g., AlN, SiC, etc.) having a thickness of 1 μm.

The mole number of metal (e.g., Al, Si, etc.) and the mole number of oxygen both of which are contained in the abbreviated flat plate can be evaluated. The molar ratio of metal (e.g., Al, Si, etc.) to oxygen can be evaluated from the ratio of the signal intensities. The thickness δ can be calculated from the evaluated mole number and molar ratio.

In the case of XPS, since the penetration depth is shallower, it is more suitable to evaluate a thinner oxide layer or the like. The evaluation method is the same as the above.

<Organic modification process>

The organic modification process is a process for organically modifying the starting particle, on which the oxide layer or the like is formed, in a reaction field of a supercritical, subcritical, or gas phase aqueous solvent to obtain an organically modified inorganic fine particle. By this process, an extremely high degree of supersaturation can be obtained compared to the conventional liquid phase or vapor phase method, which results in a finer particle, i.e., an extremely large specific surface area per unit volume (weight).

(Reaction field)

In the case of organically modifying the surface of the starting particle, the equipment used is not limited as long as a high-temperature high-pressure condition can be achieved, and can be selected from equipments widely known to a person ordinarily skilled in the art. For example, both a batch-type equipment and a distribution-type equipment can be used. A typical reactor is shown in FIG. 2, and an appropriate reaction equipment can be configured as needed.

The water used in the reaction may be supercritical water (SCW) or may be non-critical water. The non-critical water includes gas phase water or water in a state referred to as water vapor (or steam). The non-critical water also includes water in a state referred to as subcritical water. When it is non-critical water, it is preferably water in a liquid state (liquid phase) or preferably contains a liquid phase as the main phase. Under the hydrothermal condition, it has a function to form a single phase with a relatively heavy hydrocarbon, and the solvent effect (dielectric constant, the effect on the reaction equilibrium and the reaction rate associated with hydration structure formation) can also be significantly controlled by temperature and pressure, near the critical point.

The "hydrothermal condition" according to the present invention is defined as a condition of water coexistence with the following reaction temperature. The "hydrothermal condition" here includes a condition of coexistence with gas phase water or water in a state referred to as water vapor (or steam), as described above.

Although not particularly limited, the lower limit of the reaction temperature is preferably 150°C or higher, is more preferably 200°C or higher, is further preferably 250°C or higher, and is particularly preferably 300°C or higher.

The upper limit of the reaction temperature is preferably 1000°C or lower, is more preferably 600°C or lower, is further preferably 500°C or lower, and is particularly preferably 450°C or lower.

The reaction pressure in the present invention is not particularly limited. However, the reaction pressure may be atmospheric pressure or higher and 50 MPa or lower. The reaction pressure is more preferably 5 MPa or higher and 40 MPa or lower.

The reaction time in the present invention is not particularly limited. However, the reaction time may be, for example, 1 minute or more and 48 hours or less, may be more generally 5 minutes or more and 24 hours or less, and may be more typically 10 minutes or more and 12 hours or less.

(Reaction mechanism)

In general, hydroxyl groups exist on the surface of the starting particle, on which an oxide layer or the like was formed on the surface, in water. For example, when the starting particle is a metal oxide, hydroxyl groups exist on the surface of the starting particle due to the following reaction equilibrium.

$$MO + H_2O = M(OH) \qquad (1)$$

In general, this reaction is exothermic and the equilibrium shifts to the left side at a high temperature. In addition, the reaction due to the surface modifier used is as follows and is due to dehydration.

The reaction to the left direction (reverse reaction) is a well-known reaction in the hydrolysis of an alkoxide or the like, and easily occurs by adding water even near room temperature. Since this reverse reaction is generally exothermic, it is suppressed at a higher temperature, which makes the reaction to the right direction more easily occur. This is similar to the temperature dependence of the dehydration reaction of the metal hydroxide in formula (1).

In the reaction to the right direction (dehydration), since the polarity of the product is lower than that of the original reaction system, the lower polarity of the solvent leads to higher stability of the product in water. The dielectric constant of water is lower at a higher temperature. The dielectric constant drops sharply like that the dielectric constant is 15 or lower at 350°C or lower and that the dielectric constant is about 1 to 10, particularly at around the critical point or higher. This accelerates the dehydration reaction beyond the normal temperature effect.

$$M(OH) + ROH = M(OR) + H_2O = M\,R + 2H_2O$$

$$M(OH) + RCOOH = M(OCOR) + H_2O = MR + H_2O + CO_2$$

$$M(OH) + RCHO = M(OH)CR + H_2O = MC = R + 2H_2O,\ MCR + 2H_2O,\ MR + H_2 + CO_2$$

$$M(OH) + RSH = MSR + H_2O \qquad (reduction)$$

These formulae are referred to as (2).

The attack of the hydroxyl group by an amine is known to proceed near room temperature in the presence of a strong acid or via substitution with Cl, while the exchange with OH occurs in water under a high-temperature high-pressure condition. As for an organic substance, we have confirmed that an amination of hexanol proceeds between hexanamide and hexanol with a carboxylic acid as a catalyst, and it is assumed that a similar reaction has occurred. The reaction mechanism of the present method is shown schematically in FIG. 1, taking a part of it as an example.

In the case of a thiol, the possibility of reduction in the reaction field has been reported, and it is assumed that the thiol is partially reduced on the surface of the metal oxide, resulting in a thiol addition reaction.

As mentioned above, the temperature dependences of the formation of a hydroxyl group on the surface of the metal oxide in formula (1) and the organic modification reaction in formulae (2) are in opposite directions. Therefore, especially when the reaction in formula (1) is in the left direction, i.e., dehydration, it is extremely important and sometimes difficult to set the reaction condition such as the coexistence of an acid, in order to occur the modification reaction.

In contrast, the organic modification in a reaction field of a supercritical, subcritical, or gas phase aqueous solvent is a method that makes it possible.

In general, the fine particle produced by the hydrolysis reaction is a hydroxide, and the equilibrium shifts to the oxide side at a higher temperature. The molecular arrangement state shifts from a random amorphous state to an aligned crystalline state at a higher temperature. The technique described in the present embodiment can be used to obtain a highly crystalline fine particle that is organically modified.

In the case of a fine particle, surface energy and external energy such as gravity and electric field are antagonistic concerning the particle diameter. Namely, when the particle is separated or dispersed by centrifugal force, gravity sedimentation, electrophoresis, etc., the particle with a diameter of several hundred nanometers or less cannot be dispersed unless a large external field force is applied. When the diameter is 50 nm or less, the influence of the surface energy becomes even greater, and it becomes extremely difficult with an external field energy alone unless the surface properties are controlled or the solvent properties are controlled. The technique described in the present embodiment can solve this problem.

In particular, when the diameter of the particle is 10 nm or less, the overlap of quantum states disappears and the surface electronic state has a significant effect on the bulk physical properties. Therefore, it has been found that physical properties are completely different from those of the bulk particle, i.e., the quantum size effect (Kubo effect) appears. Although the particle having a diameter of 10 nm or less can be considered particularly as a different substance, the technique described in the present embodiment can suitably organically modify the fine particle.

(How to set conditions)

((Reaction equilibrium))

The reaction condition under which the organic modification occurs varies depending on the metal species and the modifier, but can be organized as follows.

The reaction proceeds when the equilibrium in formula (1) is on the right side and when the equilibrium in formulae (2) is on the right side. The optimal reaction condition varies because each equilibrium depends on the metal species and modifier. When the temperature is increased, the equilibrium in formulae (2) shifts to the right side, and shifts rapidly to the progressive side, especially at 350°C or higher. On the other hand, the equilibrium in formula (1) shifts to the left side. The DB in formulae (1) and (2) can be used as a reference for the reaction condition.

Since the functional group in the surface of the metal oxide can be exchanged with OH by the coexistence of a base or an acid, a dehydration reaction with a modifier can proceed under the condition. In this case, since the dehydration reaction easily occurs in a presence of an acid, the reaction can proceed by the coexistence of an acid in a small amount at a high temperature.

((Phase equilibrium))

Since alcohols, aldehydes, carboxylic acids, and amines having a relatively short-chain hydrocarbon are soluble in water, the surface modification of the metal oxide with methanol, for example, is possible. However, in the case of having a longer-chain hydrocarbon, due to the phase separation from the aqueous phase, the organic modifier may not, in actuality, be reacted with the metal oxide in the aqueous phase, even if the above-mentioned reaction equilibrium is on the progressive side. Namely, although the introduction of a lipophilic group is relatively easy, the phase behavior must be considered when targeting a long-chain hydrocarbon with C3 or more.

The phase behavior between a hydrocarbon and water has already been reported and can be used as a reference. In general, since a homogeneous phase is formed at any ratio under a condition above the critical gas-liquid locus, such temperature and pressure conditions can be set for a good reaction condition.

If the optimum reaction temperature is desired to be lower, a third component can be coexisted to form a homogeneous phase with water and an organic substance. For example, it is well known that the coexistence region of hexanol and water can be formed at a lower temperature by the coexistence of ethanol or ethylene glycol, which can form a homogeneous phase with water even at a low temperature. This can be used to conduct a reaction between the metal oxide and the organic substance. In this case, however, the selection of the third component is important so that the surface modification reaction by the third component does not occur.

The present method described above enables, for the first time, an organic modification of a long chain in water.

<Organic modification: in-situ surface modification during hydrothermal synthesis>

As mentioned above, the temperature dependences of the formation of a hydroxyl group on the surface of the metal oxide in formula (1) and the organic modification reaction in formulae (2) are in opposite directions. Therefore, especially when the reaction in formula (1) is in the left direction, i.e., dehydration, it is extremely important and sometimes difficult to set the reaction condition such as the coexistence of an acid, in order to occur the modification reaction.

In contrast, hydrothermal synthesis in-situ surface modification is a method that makes it possible.

Hydrothermal synthesis proceeds by the following reaction pathway.

$$Al(NO_3)_3 + 3H_2O = Al(OH)_3 + 3HNO_3$$

$$nAl(OH)_3 = nAlO(OH) + nH_2O$$

$$nAlO(OH) = n/2Al_2O_3 + n/2H_2O$$

The proceeding of this reaction pathway is the same when another kind of metal, a sulfate, a hydrochloride, or the like is used. Further, when the hydrothermal synthesis is performed using high-temperature high-pressure water as the reaction field with the equipment shown in FIG. 2, for example, a particle having a finer diameter can be produced. Therefore, a finer organic modified particle can be obtained by the in-situ surface modification technique. The particle diameter can also be controlled by adjusting the temperature and pressure.

As shown here, even if hydroxyl groups are finally desorbed from the surface by the dehydration reaction, many hydroxyl groups are formed in the product as a reaction precursor or on the surface thereof. If an organic modifier coexists in this reaction field, it is possible to make the reaction occur under a condition where hydroxyl groups are present. The modification reaction is also accelerated because an acid, which is also a catalyst for the proceeding of the dehydration reaction, coexists in the reaction field. This makes it possible to perform surface modification which could not be performed for the oxides.

In the technology described in the present embodiment, the surface of the fine particle can be organically modified, without assuming equilibrium to an oxide by achieving a high-temperature field in which the precursor firstly synthesized is hydrolyzed to synthesize a metal oxide and a metal hydroxide, and further without using a radical polymerization substrate which is sensitive to, for example, an oxidizing substance, a temperature, a light, and the like. Therefore, a metal particle or a particle having a different redox state can also be organically modified.

The present embodiment attempts to use a phase state in which a homogeneous phase with water and an organic material is formed and further attempts to synthesize an inorganic-organic composite material, whereby a highly crystalline metal or metal oxide particle having a size of several nm to 50 nm or less is synthesized and the surface is organically modified with an organic molecule.

The metal oxide can be made further finer by reacting it while capping the organic molecule in a reaction field such as supercritical. In addition, by organically modifying the surface of the metal oxide fine particle having a hydrophilic surface with a hydrophobic group such as an organic group like hydrocarbon, the particle which is difficult to be collected from an aqueous medium can be easily and surely transferred to the organic medium side for separation and collection. Through the organic modification, a fine particle with a controlled crystal exposed surface can be collected without changing the shape. In addition, since the photocatalytic device is manufactured in a coating-type process, it is possible to realize high affinity with the solvent, to disperse the fine particle at high concentration, and to exhibit low viscosity.

The organic modifier is not particularly limited as long as it can make a hydrocarbon be strongly bonded to the surface of the fine particle, and can be selected from organic substances widely known in the fields, where a fine particle is expected to be applied, including the fields of organic chemistry, inorganic material, and polymer chemistry. Examples of the organic modifier include, for example, organic substances which allow the formation of a strong bond such as ether bond, ester bond, a bond via an N atom, a bond via an S atom, a metal-C- bond, a metal-C= bond, or a metal-(C=O)-bond. The carbon number of the hydrocarbon is not limited, but is preferably 18 or less. If the hydrophobic group is a short chain, when the fine particle is added to a binder that constitutes a cathode compound, moderately phase-separated structuring occurs and lithium ion and electron transfer can proceed smoothly, whereby a higher battery capacity property is obtained and the degradation associated with charging and discharging is expected to be suppressed.

Among them, taking into account that the carbon number of the linked hydrocarbon is about 2, the carbon number of the hydrophobic group is preferably 9 or less.

The organic modifier may be linear, branched, or cyclic. The organic modifier may be substituted or unsubstituted. The substituent may be selected from functional groups widely known in the fields of organic chemistry, inorganic material, polymer chemistry, etc. One or more substituents may be present, and in the case of using a plurality of substituents, the substituents may be the same or may be different from each other.

Examples of the organic modifier include, for example, alcohols, aldehydes, ketones, carboxylic acids, esters, amines, thiols, amides, oximes, phosgene, enamines, amino acids, peptides, and sugars.

Examples of the typical modifier include, for example, pentanol, pentanal, pentanoic acid, pentanamide, pentanethiol, hexanol, hexanal, hexanoic acid, hexanamide, hexanethiol, heptanol, heptanal, heptanoic acid, heptanamide, heptanethiol, octanol, octanal, octanoic acid, octanamide, octanethiol, decanol, decanal, decanoic acid, decanamide, and decanethiol.

Examples of the hydrocarbon group described above include linear or branched alkyl groups which may be substituted, cyclic alkyl groups which may be substituted, aryl groups that may be substituted, aralkyl groups that may be substituted, and saturated or unsaturated heterocyclic groups that may be substituted. Examples of the substituent include, for example, carboxy group, cyano group, nitro group, halogens, ester group, amide group, ketone group, formyl group, ether group, hydroxyl group, amino group, sulfonyl group, -O -, -NH-, and -S-.

(Coexistence of oxidizing agent)

Although not required, the process for making a particle fine is preferably performed under the coexistence of an oxidizing agent.

If the surface of the fine particle is organically modified, the particle becomes hydrophobic. Even if the surface of the carbon is oxidized to form an OH group, the high-temperature hot-water treatment removes the OH group, which results in making it hydrophobic.

By conducting the process of making a particle fine, the surface of the fine particle comes to have hydrophilic properties, whereby lithium can move freely when the fine particle is used as a cathode active material for a nonaqueous electrolyte secondary battery. Therefore, a cathode active material having excellent battery performances typically such as electric capacity and cycle properties can be provided.

The kind of the oxidizing agent is not particularly limited, and examples thereof include hydrogen peroxide, lithium permanganate, potassium permanganate, ammonium peroxodisulfate, sodium hypochlorite, oxygen gas, nitric acid, and sulfuric acid.

(Continuous manufacturing)

The organic modification process preferably includes a step of synthesis using a continuous reactor in the presence of an organic modifier in a reaction field at a pH of 8 or more, in which constituent chemical elements which constitute the fine particle are included in a proportion different from stoichiometric proportion.

In continuous manufacturing, the Reynolds number of the fluid in the reaction field is preferably 3,000 or more, is more preferably 4,000 or more, and is further preferably 5,000 or more. This allows the raw material to be dissolved in an aqueous solvent in a supersaturated state, whereby the average particle diameter of the resulting fine particle is reduced and the particle diameter distribution is made narrower.

In general, in the classical homogeneous nucleation and growth mechanism, the higher concentration leads to a higher degree of supersaturation and the more easily formation of the fine particle. However, according to the non-classical nucleation theory, after the initial droplet nuclei are generated, the growth of the droplet nuclei occurs through their coalescence and agglomeration, whereby the diameter of the generated particle is increased with the increase of the concentration. This mechanism can be used as a method to form a single crystal and to increase its size in a short time. If the coalescence of the droplet nuclei or the immature microcrystal occurs at a faster rate than the crystallization rate, the highly single-crystalline particle can be collected. Since the concentration is high, productivity also becomes high. To achieve this, the formation of a homogeneous mixing field is effective, and also in this sense, the Re number is preferably 3,000 or more.

[Collection of fine particle having organically modified surface]

By organically modifying the surface of the fine particle having a hydrophilic surface with a hydrophobic group which is an organic group such as a hydrocarbon, the particle which is difficult to be collected from an aqueous medium can be easily and reliably transferred to an organic medium side for separation and collection. The organic modification also allows the collection of the fine particle having a controlled crystal exposed surface without changing the shape.

In the method described in the present embodiment, it is preferable to organically modify the surface of the metal oxide or the like, then to conduct the lyophilization or supercritical treatment, and to collect the organically modified carbon material When the organic modification is performed using subcritical or supercritical water, since the carbon material after the organic modification is hydrophobic, it is automatically phase-separated from water. Therefore, it can be collected well by adding a small amount of organic solvent. However, when an organic solvent is used during the organic modification, the solvent must be dried and removed, and the capillary force acts during the drying process, whereby the carbon material is agglomerated. Therefore, by conducting the freeze-drying or supercritical treatment to suppress the capillary force and to prevent agglomeration, the organically modified carbon material can highly efficiently be collected. In particular, the organic solvent can be completely recovered by conducting the supercritical carbon dioxide drying, and can be reused. It also enables the separation from the unused modifier.

«Organic modified inorganic fine particle»

<Application>

The organically modified inorganic fine particle described in the present embodiment has a function as a particle that meets user needs. For example, the particle has a function as industrial and manufacturing materials such as nanostructure modification materials for ceramics, photo-functional coating materials, electromagnetic wave shielding materials, secondary battery materials, fluorescent materials, electronic component materials, magnetic recording materials, and abrasive materials; and materials which enable high performance, high density, and high precision of pharmaceutical and cosmetic materials and the like.

Among them, the organically modified inorganic particle is useful as a high concentration barium titanate dispersion resin for semiconductor packaging, a nanoparticle dispersion ink for inkjet, a battery material, a catalyst material, a lubricant, or the like. These can be prepared as follows.

Electronic components such as semiconductors need to be packaged with a high dielectric constant resin to exclude an electrical disturbance from the outside of the package. A barium titanate particle dispersed thermosetting resin is used as a method for this purpose. In the high concentration barium titanate particle dispersed resin for packaging of the present semiconductor or the like, high concentration dispersion of the barium titanate particle was required. Although it is possible to disperse the barium titanate particle in the resin using a surfactant, there is a problem of dielectric loss occurring at the interface. By using the technique for producing an organically modified particle, it is possible to synthesize a strongly bonded surface-modified particle, and moreover to synthesize a material that is an integral part of the resin and the inorganic material ultimately by introducing the same monomer as the resin.

Since a nanoparticle exhibit excellent physical properties such as hue, good coloring, and durability, they are used in inks for high-tech equipment, for example, inkjet nanoparticle dispersed inks. Inkjet printers using an ink in which nanoparticles are dispersed are expected to be used for making a wiring, a circuit diagram, and the like by inkjet. However, it is necessary to synthesize a nanoparticle suitable for it and to disperse it in a solvent at a high concentration. The technology for manufacturing an organically modified particle according to the present invention makes it possible to synthesize a particle having the same polymer as the ink solvent.

Battery materials such as electrode materials for Li-ion batteries and capacitor materials are mixed with a carbon material to form a material for products. The battery materials must be sufficiently dispersed with carbon and a solvent. In general, this process requires the use of a dispersing agent, but the technology for manufacturing an organic-modified fine particle according to the present invention makes it possible to synthesize a material that can be homogeneously dispersed with a solvent without the use of any dispersing agent.

The supported metal catalysts are activated when the electron orbital of the metal interacts with the oxide catalyst, resulting in charge transfer. Therefore, the technology for manufacturing an organic-modified fine particle according to the present invention, by which different materials can be mixed in nanometer order, makes it possible to prepare a catalyst having an active point in high density where the metal and oxide are contacted, resulting in an excellent catalytic material.

In addition, lubricants are used to reduce friction between solids, and lubricants containing a nanoparticle are expected to act as nanobearing. Specifically, the shear force is converted into rotational kinetic energy of the bearing, preventing it from being transferred to the other side as a shear force. Conventionally, an organic polymer has been used as a lubricant, but the technique for manufacturing an organically modified fine particle according to the present invention makes it possible to disperse an oxide nanoparticle having a strong structure.

<Average primary particle diameter>

The upper limit of the average primary particle diameter of the fine particles is not particularly limited. However, for example, the diameter is preferably 10 $\mu$m or less, is more preferably 1 $\mu$m or less, is further preferably 100 nm or less, is furthermore preferably 50 nm or less, and is particularly preferably 30 nm or less.

The lower limit of the average primary particle diameter of the fine particles is also not particularly limited. In general, the fine particles are converted to secondary particles by compaction molding, and the secondary particles are used in a packed bed reactor for cyclic operation or as circulating fluidized bed particles.

In the present embodiment, the average primary particle diameter of the fine particle is the value obtained by capturing an image of the particle by TEM (transmission electron microscope) and by analyzing the TEM image with image analysis and image measurement software. In this case, where the particle diameter distribution is wide, attention should be paid to whether the particle in the field of view is representative of all particles.

<Specific surface area>

From the viewpoint of the reaction activity, the specific surface area of the fine particles may be 5 $m^2$/g or more and 1000 $m^2$/g or less, may be more generally 10 $m^2$/g or more and 500 $m^2$/g or less, may be typically 20 $m^2$/g or more and 400 $m^2$/g or less, and may be preferably 30 $m^2$/g or more and 300 $m^2$/g or less.

EXAMPLES

The present invention is described in detail using the Examples below, but the present invention is not limited to these Examples.

«Test Example 1» Production of organically modified AlN fine particles

<Example 1> With oxide layer formation process

[Oxide layer formation process]

AlN particles (primary average particle diameter: 50 nm, made by FUJIFILM Wako Pure Chemical Corporation) were heated at 900°C for 12 hours to form an oxide layer on the surface of the AlN particles.

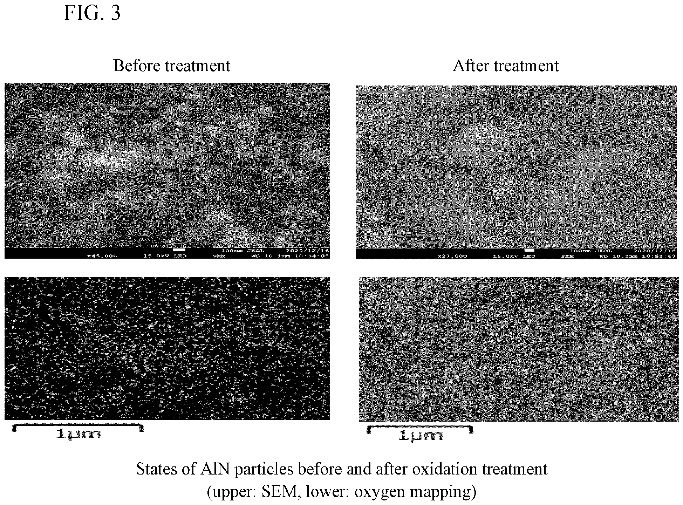

FIG. 3 shows the states of the AlN particles before and after the oxidation treatment, in which the upper sections show SEM images and the lower sections show oxygen mapping. In this example, for the SEM measurement, a field-emission scanning electron microscope (FE-SEM, JSM-7800F, made by JEOL Ltd.) was used, and the same is applied hereafter.

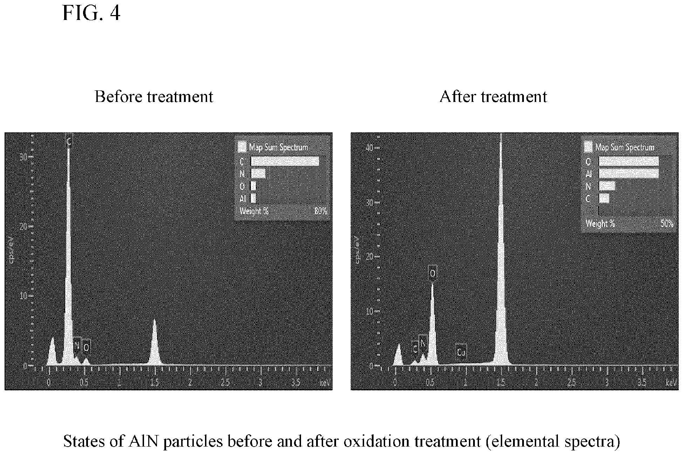

FIG. 4 shows the elemental spectra before and after the oxidation treatment. For the elemental spectrum measurement, X-Max SDD Detector (a silicon drift detector using an energy dispersive X-ray spectroscopy (EDX), made by Oxford Instruments) was used with an acceleration voltage of 15.0 kV, and the same is applied hereafter.
After the oxidation treatment, the ratio of oxygen is increased. Electron beams are thought to be penetrated up to about 1 $\mu$m. Since the primary average particle diameter of the AlN particles is 50 nm, all electron beams can be penetrated into the AlN particles and are thought to be signals from all particles. Therefore, the molar ratio of Al:O can be deemed to be 50:50.
Here, the thickness $\delta$ of the oxide layer in the AlN particles after oxidation treatment is calculated.
Approximating the AlN particles to a sphere with a particle diameter of d, the volume is $\pi d^3/6$ and the surface area is $\pi d^2$. The density of AlN is 3.2 g/$cm^3$ and the molecular weight is 41. Therefore, the weight of AlN is 3.2 $\pi d^3/6$ and the mole number is $3.2\pi d^3/(6\times41)$.
It is assumed that an $Al_2O_3$ layer with a thickness of $\delta$ (density: 3.9 g/$cm^3$, molecular weight: 102) was formed on the surface of the AlN particles. If $Al_2O_3$ is approximated as a layer with a thickness of $\delta$ formed on the surface of the sphere, the mole number of Al in $Al_2O_3$ is $\pi d^2\delta\times3.9\times2/102$, and the mole number of O in $Al_2O_3$ is $\pi d^2\delta\times3.9\times3/102$.
Since the molar ratio of Al:O can be deemed to be 50:50, the following equation:

$$3.2\pi d^3/(6\times41) + \pi d^2\times3.9\times2/102 = \pi d^2\delta\times3.9\times3/102$$

can be obtained. Since the primary average particle diameter d of the AlN particles is 50 nm, the thickness $\delta$ of the oxide layer is calculated to be 1.7 nm.

[Organically modification process]

Then, a 5cc tube autoclave (Tube Bomb Reactor) was used for the experiment. To the reaction tube were added 0.1 g of the AlN particles having an oxide layer on the surface and 0.1 ml of diethyl decylphosphonate (made by Alfa Aesar) as well as 1 ml of pure water, and the reaction tube was placed in a heating furnace previously set at 380°C and was heated. The pressure in the case of assuming the resultant liquid as pure water was 39 MPa. The temperature was raised for 1.5 minutes. The reaction was conducted for 10 minutes. The reaction was stopped by placing the reaction tube in cold water. The product (organically modified AlN fine particles of Example 1) was collected by washing once with water and once with acetone, and by drying.

<Comparative Example 1> Without oxide layer formation process

Organically modified AlN fine particles for Comparative Example 1 were obtained by the same method as in Example 1, except that the organic modification process was performed without the oxide layer formation process.

<Evaluation> IR Spectrum

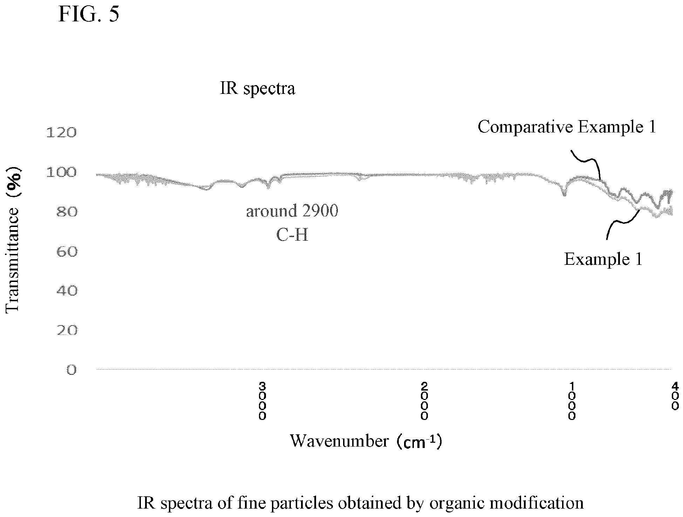

The infrared spectra (IR spectra) of the organically modified AlN fine particles obtained in Example 1 and Comparative Example 1 were measured. FIG. 5 shows the IR spectra of the organically modified AlN fine particles obtained in Example 1 and Comparative Example 1. The peak based on the organic modifier was confirmed in both Example 1 and Comparative Example 1. When the modification with a supercritical fluid was conducted as one of the surface treatment methods for AlN, the peak of modification was confirmed. The peak of modification was also confirmed by the organic modification after oxidation treatment. From the above results, it can be found that the organic modification of AlN is possible, even when the oxidation treatment is performed to inhibit hydrolysis.

«Test Example 2» Production of organically modified TiN fine particles

<Example 2> With oxide layer formation process

[Oxide layer formation process]

TiN particles (primary average particle diameter: 1.0 to 1.5 $\mu$m, made by FUJIFILM Wako Pure Chemical Corporation) were heated at 900°C for 12 hours to form an oxide layer on the surface of the TiN particles.

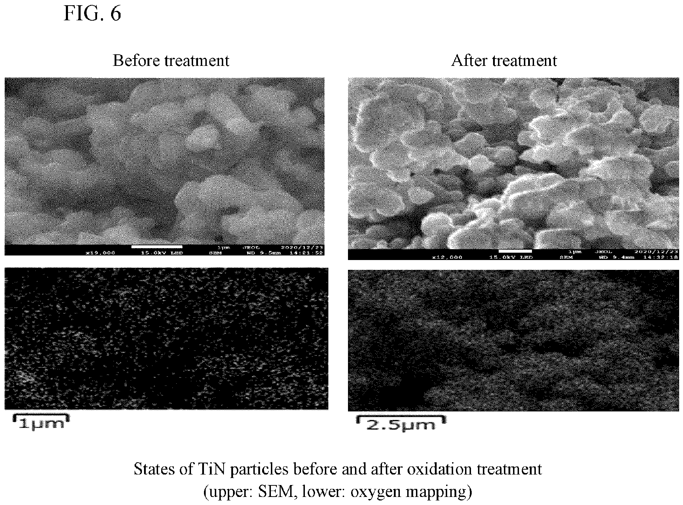

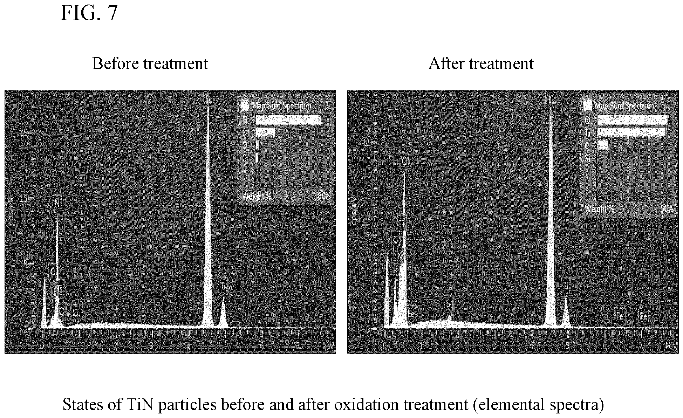

FIG. 6 shows the states of the TiN particles before and after the oxidation treatment, in which the upper sections show SEM images and the lower sections show oxygen mapping. FIG. 7 shows the elemental spectra before and after the oxidation treatment. The elemental spectra were obtained by energy dispersive X-ray spectroscopy (EDX). After the oxidation treatment, the ratio of oxygen is increased, and the molar ratio of Ti:O is 50:50.
The density of TiN is 5.4 g/cm$^3$ and the molecular weight is 62. The density of TiO$_2$ is 4.2 g/cm$^3$ and the molecular weight is 84. The thickness $\delta$ of the oxide layer is calculated to be 0.29 nm in the same way as for the AlN particles.

[Organically modification process]

Then, a 5cc tube autoclave (Tube Bomb Reactor) was used for the experiment. To the reaction tube were added 0.1 g of the TiN particles having an oxide layer on the surface and 0.1 ml of diethyl decylphosphonate (made by Alfa Aesar) as well as 1 ml of pure water, and the reaction tube was placed in a heating furnace previously set at 380°C and was heated. The pressure in the case of assuming the resultant liquid as pure water was 39 MPa. The temperature was raised for 1.5 minutes. The reaction was conducted for 10 minutes. The reaction was stopped by placing the reaction tube in cold water. The product (organically modified TiN fine particles of Example 2) was collected by washing once with water and once with acetone, and by drying.

<Comparative Example 2> Without oxide layer formation process

Organically modified TiN fine particles for Comparative Example 2 were obtained by the same method as in Example 2, except that the organic modification process was performed without the oxide layer formation process.

<Evaluation> IR Spectrum

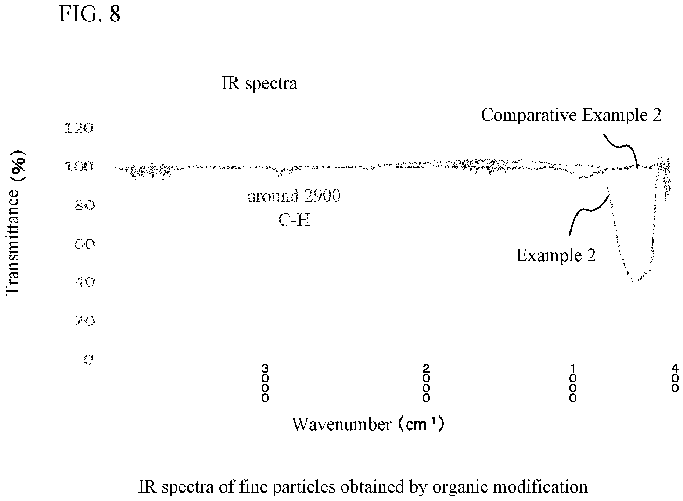

The infrared spectra (IR spectra) of the organically modified TiN fine particles obtained in Example 2 and Comparative Example 2 were measured. FIG. 8 shows the IR spectra of the organically modified TiN fine particles obtained in Example 2 and Comparative Example 2. The peak based on the organic modifier was confirmed in both Example 2 and Comparative Example 2. When the modification with a supercritical fluid was conducted as one of the surface treatment methods for TiN, the peak of modification was confirmed. The peak of modification was also confirmed by the organic modification after oxidation treatment. From the above results, it can be found that the organic modification of TiN is possible, even when the oxidation treatment is performed to inhibit hydrolysis.

«Test Example 3» Production of organically modified $Si_3N_4$ fine particles

<Example 3> With oxide layer formation process

[Oxide layer formation process]

$Si_3N_4$ particles (primary average particle diameter: 30 nm, made by FUJIFILM Wako Pure Chemical Corporation) were heated at 1100°C for 12 hours to form an oxide layer on the surface of the $Si_3N_4$ particles.

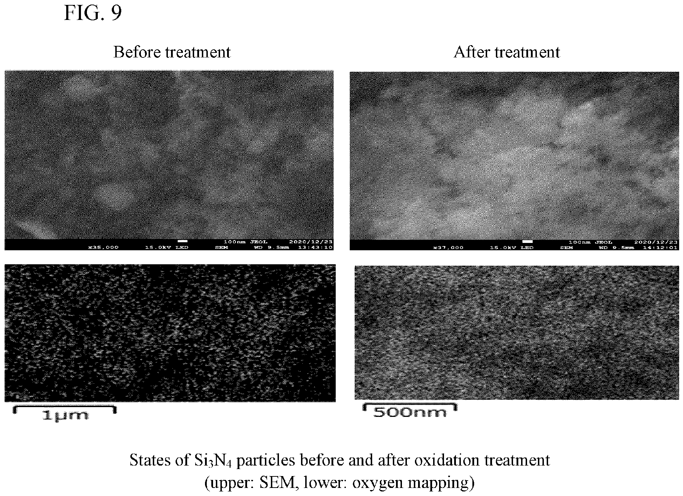

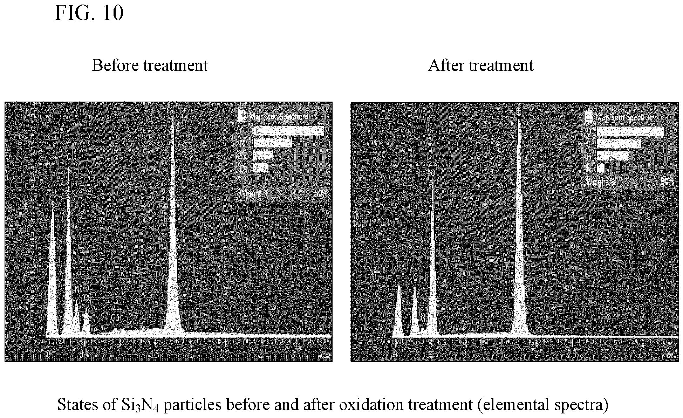

FIG. 9 shows the states of the $Si_3N_4$ particles before and after the oxidation treatment, in which the upper sections show SEM images and the lower sections show oxygen mapping. FIG. 10 shows the elemental spectra before and after the oxidation treatment. After the oxidation treatment, the ratio of oxygen is increased.

The density of $Si_3N_4$ is 3.4 g/cm$^3$ and the molecular weight is 140.3. The density of $SiO_2$ is 2.7 g/cm$^3$ and the molecular weight is 60. The thickness $\delta$ of the oxide layer is calculated to be 4.4 nm in the same way as for the AlN particles.

[Organically modification process]

Then, a 5cc tube autoclave (Tube Bomb Reactor) was used for the experiment. To the reaction tube were added 0.03 g of the $Si_3N_4$ particles having an oxide layer on the surface and 0.1 ml of diethyl decylphosphonate (made by Alfa Aesar) as well as 1 ml of pure water, and the reaction tube was placed in a heating furnace previously set at 380°C and was heated. The pressure in the case of assuming the resultant liquid as pure water was 39 MPa. The temperature was raised for 1.5 minutes. The reaction was conducted for 10 minutes. The reaction was stopped by placing the reaction tube in cold water. The product (organically modified $Si_3N_4$ fine particles of Example 3) was collected by washing once with water and once with acetone, and by drying.

<Comparative Example 3> Without oxide layer formation process

Organically modified $Si_3N_4$ fine particles for Comparative Example 3 were obtained by the same method as in Example 3, except that the organic modification process was performed without the oxide layer formation process.

<Evaluation> IR Spectrum

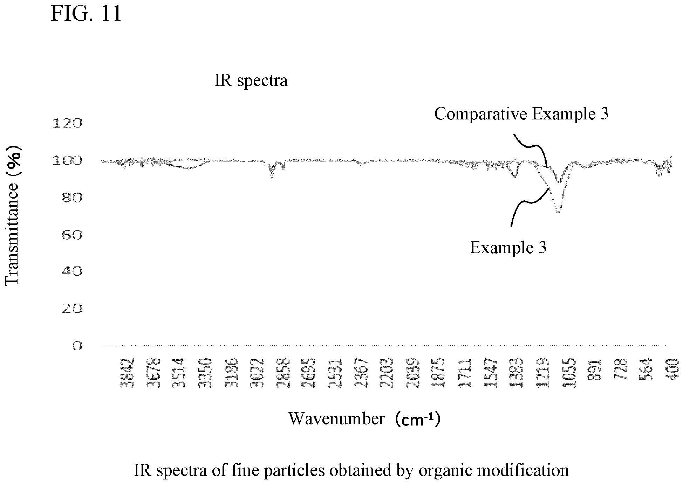

The infrared spectra (IR spectra) of the organically modified $Si_3N_4$ fine particles obtained in Example 3 and Comparative Example 3 were measured. FIG. 11 shows the IR spectra of the organically modified $Si_3N_4$ fine particles obtained in Example 3 and Comparative Example 3. The peak based on the organic modifier was confirmed in both Example 3 and Comparative Example 3. When the modification with a supercritical fluid was conducted as one of the surface treatment methods for $Si_3N_4$, the peak of modification was confirmed. The peak of modification was also confirmed by the organic modification after oxidation treatment. From the above results, it can be found that the organic modification of $Si_3N_4$ is possible, even when the oxidation treatment is performed to inhibit hydrolysis.

«Test Example 4» Production of organically modified SiC fine particles

<Example 4-1> Formation of oxide layer on SiC fine particles (primary average particle diameter: 2 to 3 $\mu$m)

[Oxide layer formation process]

SiC particles (primary average particle diameter: 2 to 3 $\mu$m, made by Kojundo Chemical Laboratory Co., Ltd.) were heated at 900°C for 12 hours to form an oxide layer on the surface of the SiC particles.

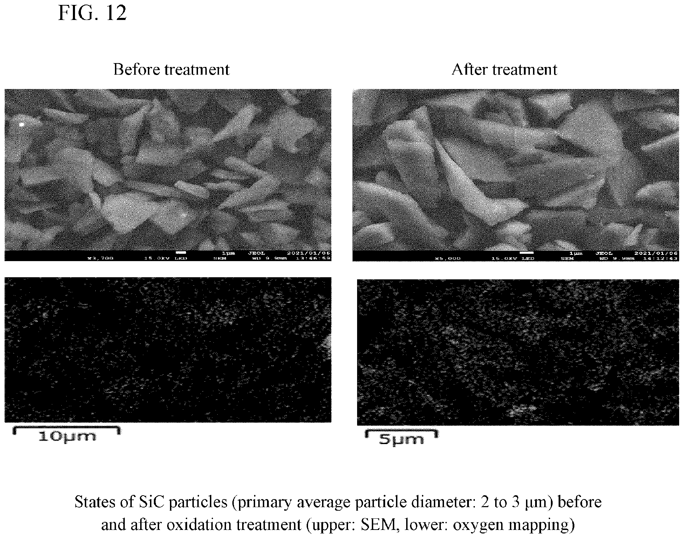

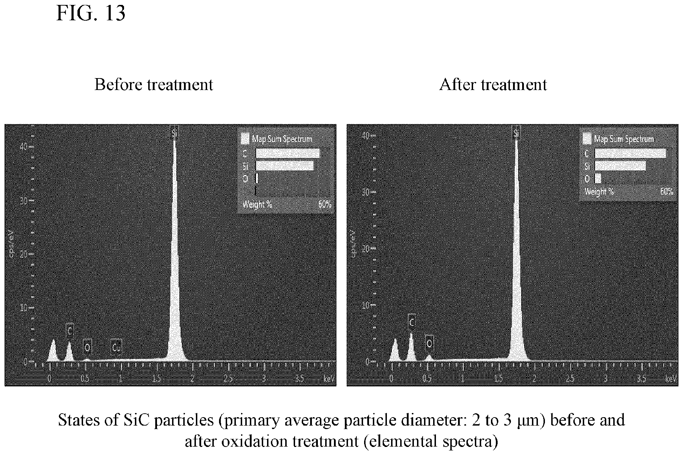

FIG. 12 shows the states of the SiC particles before and after the oxidation treatment, in which the upper sections show SEM images and the lower sections show oxygen mapping. FIG. 13 shows the elemental spectra before and after the oxidation treatment. The elemental spectra were obtained by energy dispersive X-ray spectroscopy (EDX). After the oxidation treatment, the ratio of oxygen is increased. Electron beams are thought to be penetrated up to about 1 $\mu$m. Since the primary average particle diameter of the SiC particles is 2 to 3 $\mu$m, only a portion with a thickness of 1 micron where the electron beam has been penetrated is considered to be an oxide layer (reaction phase). Therefore, the molar ratio of Si:O can be deemed to be about 95:5.

Here, the thickness $\delta$ of the oxide layer in the SiC particles after oxidation treatment is calculated.

Considering the SiC particle as an abbreviated flat plate with a thickness of 1 $\mu$m, the upper phase is $SiO_2$ (density: 2.7 g/cm$^3$, molecular weight: 60) with a thickness $\delta$, and the lower phase is SiC (density 3.2 g/cm$^3$, molecular weight: 40.1) with a thickness (1-$\delta$) (here, approximated to be about 1 $\mu$m, for simplicity).

The mole number of Si in the $SiO_2$ in the upper layer is $\delta \times 2.7/60$, and the mole number of O is $\delta \times 2.7 \times 2/60$. The mole number of Si in the SiC in the lower layer is $1000 \times 3.2/40$.

Since the molar ratio of Si:O is about 95:5, the following equation:

$$5 \times (\delta \times 2.7/60 + 1000 \times 3.2/40) = 95 \times \delta \times 2.7 \times 2/60$$

can be obtained. From this equation, $\delta$ is calculated to be 24.0 nm.

[Organically modification process]

Then, a 5cc tube autoclave (Tube Bomb Reactor) was used for the experiment. To the reaction tube were added 0.1 g of the SiC particles having an oxide layer on the surface and 0.1 ml of diethyl decylphosphonate (made by Alfa Aesar) as well as 1 ml of pure water, and the reaction tube was placed in a heating furnace previously set at 400°C and was heated. The pressure in the case of assuming the resultant liquid as pure water was 39 MPa. The temperature was raised for 1.5 minutes. The reaction was conducted for 10 minutes. The reaction was stopped by placing the reaction tube in cold water. The product (organically modified SiC fine particles of Example 4) was collected by washing once with water and once with acetone, and by drying.

<Comparative Example 4-1> Without oxide layer formation process for SiC fine particles (primary average particles diameter: 2 to 3 $\mu$m)

Organically modified SiC fine particles for Comparative Example 4-1 were obtained by the same method as in Example 4-1, except that the organic modification process was performed without the oxide layer formation process.

<Evaluation> IR Spectrum

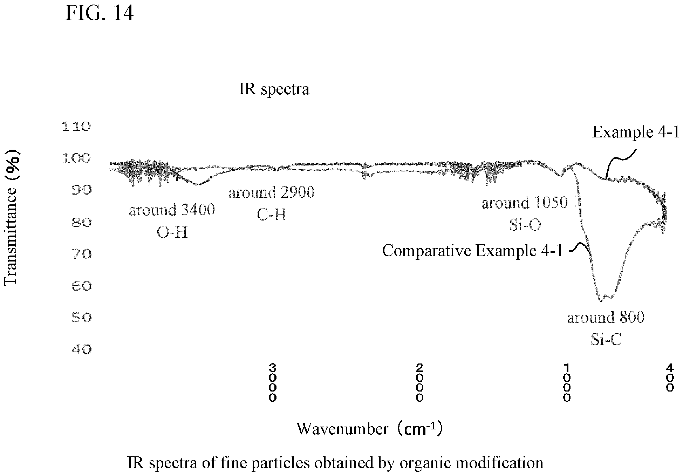

The infrared spectra (IR spectra) of the organically modified SiC fine particles obtained in Example 4-1 and Comparative Example 4-1 were measured. FIG. 14 shows the IR spectra of the organically modified SiC fine particles obtained in Example 4-1 and Comparative Example 4-1. The peak of C-H based on the organic modifier was confirmed in Example 4-1. From the above results, it can be found that the oxidation treatment is useful for the organic modification of SiC.

<Example 4-2> Formation of oxide layer on SiC fine particles (primary average particle diameter: $\leq 38$ $\mu$m)

[Oxide layer formation process]

An oxide layer was formed on the surface of SiC particles using the same method as in Example 4-1, except that SiC particles (primary average particle diameter $\leq 38$ $\mu$m, Sigma-Aldrich Co. LLC) were used.

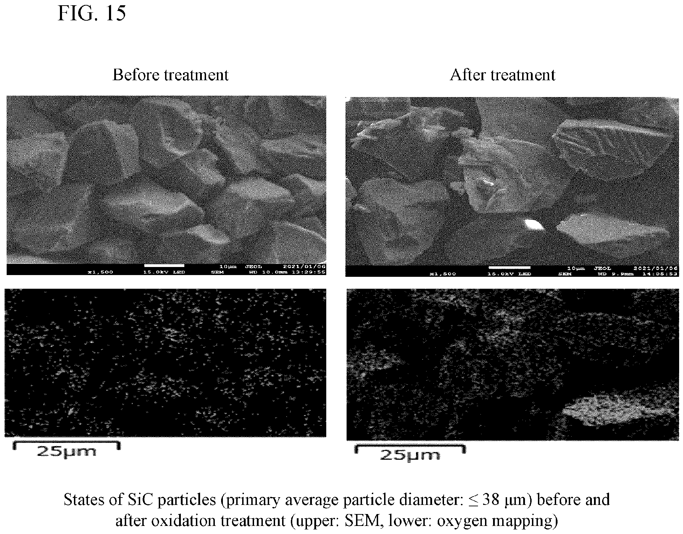

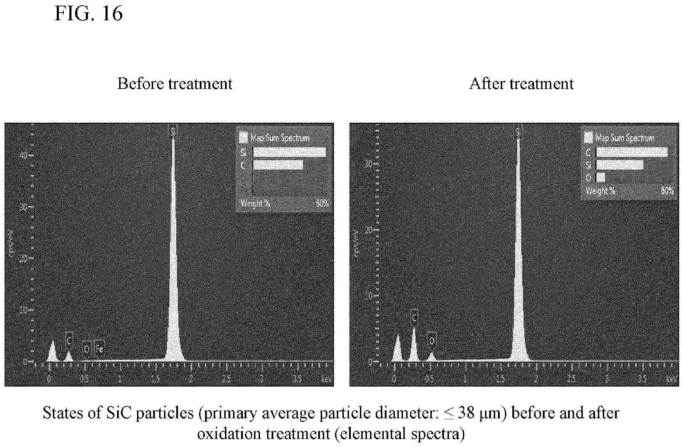

FIG. 15 shows the states of the SiC particles before and after the oxidation treatment, in which the upper sections show SEM images and the lower sections show oxygen mapping. FIG. 16 shows the elemental spectra before and after the oxidation treatment. The elemental spectra were obtained by energy dispersive X-ray spectroscopy (EDX). After the oxidation treatment, the ratio of oxygen is increased. Electron beams are thought to be penetrated up to about 1 $\mu$m. Since the primary average particle diameter of the SiC particles is 2 to 3 $\mu$m, only a portion with a thickness of 1 micron where the electron beam has been penetrated is considered to be an oxide layer (reaction phase).

The thickness $\delta$ of the oxide layer is calculated to be nearly the same as that of the SiC particles (primary average particle diameter: 2 to 3 $\mu$m) in the same way as for the SiC particles (primary average particle diameter: 2 to 3 $\mu$m).

[Organically modification process]

Organically modified SiC fine particles for Comparative Example 4-2 were obtained by the same method as in Comparative Example 4-1, except that SiC particles (primary average particle diameter $\leq 38$ $\mu$m, Sigma-Aldrich Co. LLC) were used.

<Comparative Example 4-2> Without oxide layer formation process for SiC fine particles (primary average particle diameter: ≤ 38 μm)

Organically modified SiC fine particles for Comparative Example 4-2 were obtained by the same method as in Comparative Example 4-1, except that SiC particles (primary average particle diameter ≤ 38 μm, Sigma-Aldrich Co. LLC) were used.

<Evaluation> IR Spectrum

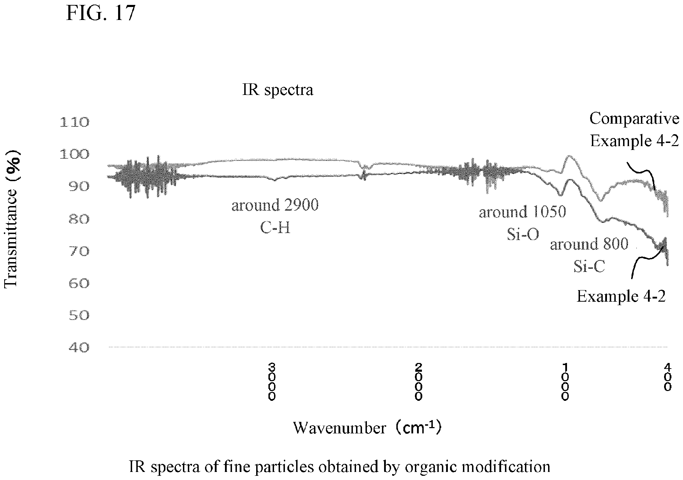

The infrared spectra (IR spectra) of the organically modified SiC fine particles obtained in Example 4-2 and Comparative Example 4-2 were measured. FIG. 17 shows the IR spectra of the organically modified SiC fine particles obtained in Example 4-2 and Comparative Example 4-2. The peak of C-H based on the organic modifier was confirmed in Example 4-2. From the above results, it can be found that the oxidation treatment is useful for the organic modification of SiC.

«Test Example 5» Production of organically modified BN fine particles

<Example 5, and Comparative Examples 5-1 and 5-2>

[Oxide layer formation process]

BN particles (primary average particle diameter: 1 μm, made by Sigma-Aldrich Co. LLC) were heated under the condition described in TABLE 1 to form an oxide layer on the surface of the BN particles.

TABLE 1

|  | Heating temperature | Heating time |
| --- | --- | --- |
| Comparative Example 5-1 | without heating | without heating |
| Comparative Example 5-2 | 400°C | 6 hours |
| Example 5 | 800°C | 3 hours |

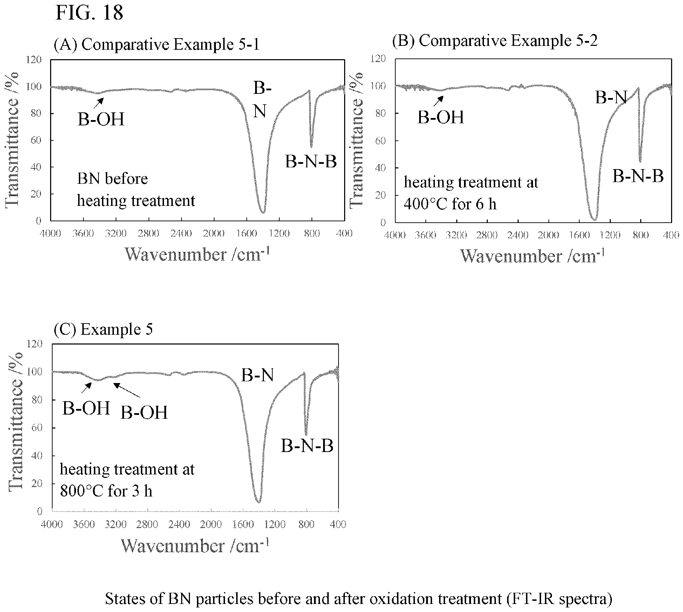

FIG. 18 shows the FT-IR spectrum data of BN particles before and after oxidation treatment. In Comparative Example 5-2 (heating temperature: 400°C), there was no change in the peak. On the other hand, in Example 5, there were peaks at both 3400 cm$^{-1}$ and 3200 cm$^{-1}$.

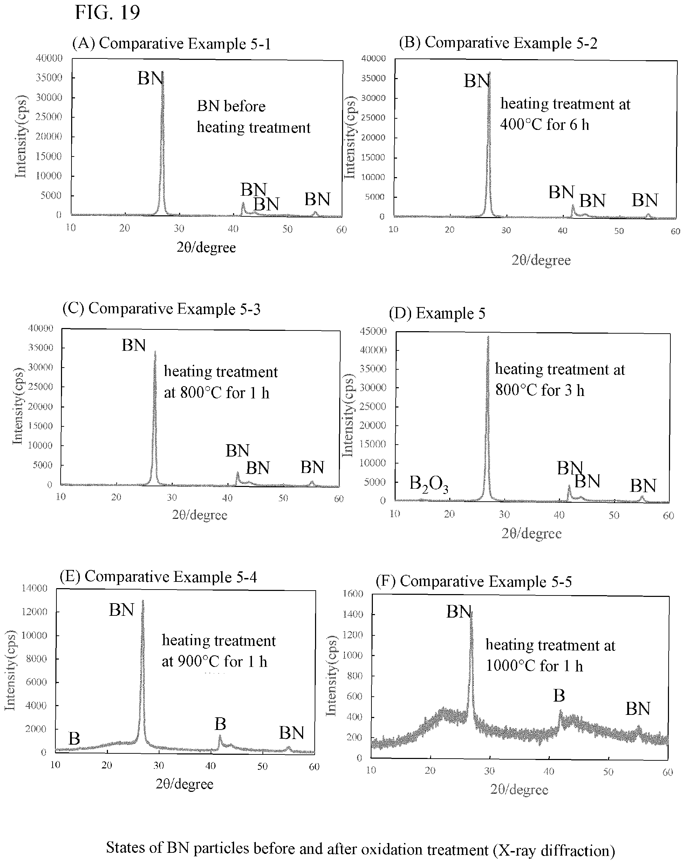

FIG. 19 shows the X-ray diffraction data of BN particles before and after oxidation treatment. No particular new peaks were observed in Comparative Example 5-2, while the peak based on boron oxide was observed in Example 5.

[Organically modification process]

Then, a 5cc tube autoclave (Tube Bomb Reactor) was used for the experiment. To the reaction tube were added 0.2 g of the BN particles having an oxide layer on the surface obtained in Example 5 and 0.225 to 0.25 g of the modifier described in TABLE 2 as well as 1.8 g of pure water, and the reaction tube was placed in a heating furnace previously set at the temperature described in TABLE 2 and was heated. The pressure in the case of assuming the resultant liquid as pure water was 39 MPa. The temperature was raised for 1.5 minutes. The reaction was conducted for 10 minutes. The reaction was stopped by placing the reaction tube in cold water. The product was collected by centrifugation, by washing three times with ethanol, and by vacuum drying.

TABLE 2

|  | Modifier | Heating temperature |
| --- | --- | --- |
| Example 5A | oleylamine | 350°C |
| Example 5B | oleylamine | 380°C |

<Evaluation> FT-IR Spectrum

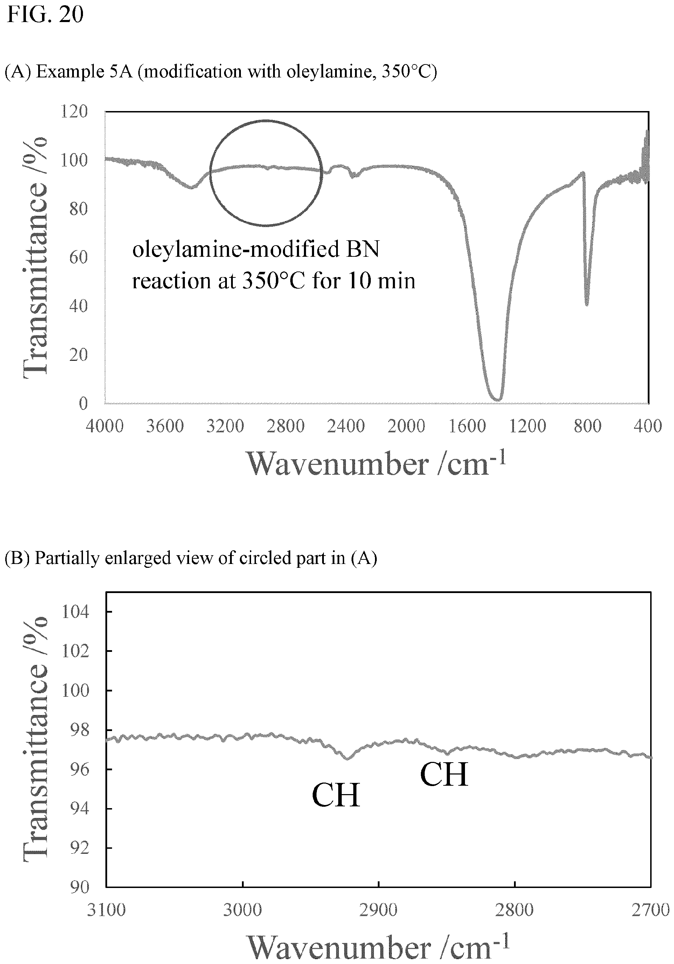

FIG. 20 shows the FT-IR spectrum data of the organically modified BN fine particles obtained in Example 5A.

In particular, FIG. 20(A) shows the FT-IR spectrum data in a wavenumber range of 4000 cm$^{-1}$ to 400 cm$^{-1}$. FIG. 20(B) is a partially enlarged view of FIG. 20(A), showing a part at an intensity of 90% to 104% in a wavenumber range of 3100 cm$^{-1}$ to 2700 cm$^{-1}$ in FIG. 20(A).

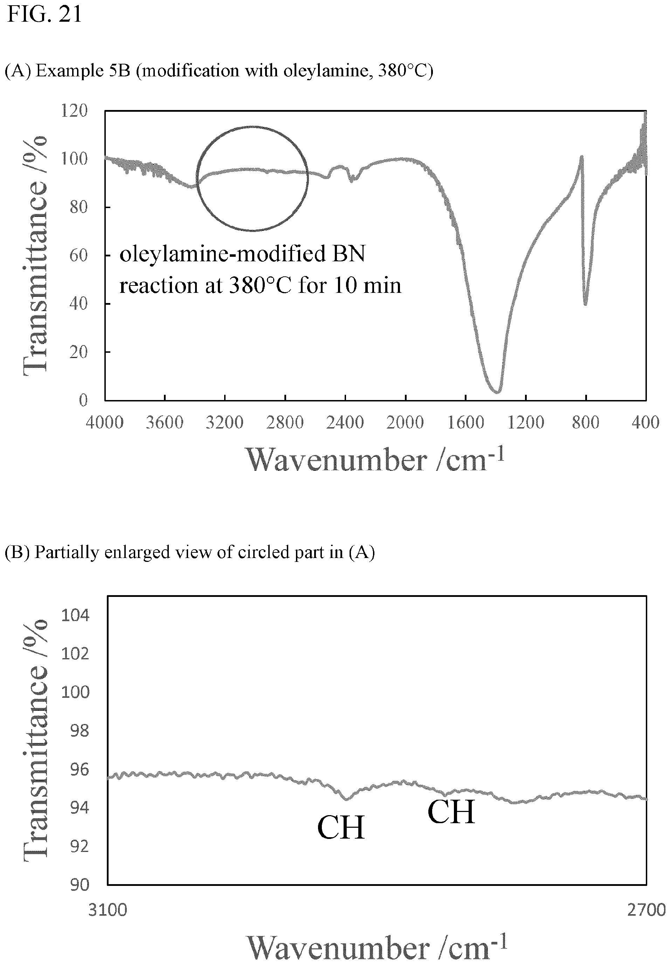

FIG. 21 shows the FT-IR spectrum data of the organically modified BN fine particles obtained in Example 5B. In particular, FIG. 21(A) shows the FT-IR spectrum data in a wavenumber range of 4000 cm$^{-1}$ to 400 cm$^{-1}$. FIG. 21(B) is a partially enlarged view of FIG. 21(A), showing a part at an intensity of 90% to 104% in a wavenumber range of 3100 cm$^{-1}$ to 2700 cm$^{-1}$ in FIG. 21(A).

When the modification of the surface of the oxidized BN was tried, it was confirmed that the surface of BN can be modified (Examples 5A and 5B).

**Claims**

1.   A method for producing an organically modified inorganic fine particle, comprising:

   forming an oxide layer, an oxyhydroxide layer, and/or a hydroxide layer on a surface of at least one or more kinds of starting particle selected from inorganic nitrides, inorganic carbides, inorganic sulfides, and insoluble salts; and
   organically modifying the starting particle, on which the oxide layer, the oxyhydroxide layer, and/or the hydroxide layer is formed, in a reaction field of a supercritical, subcritical, or gas phase aqueous solvent to obtain an organically modified inorganic fine particle.

2.   An organically modified inorganic fine particle, comprising:

   an inorganic fine particle (excluding oxide particle);
   an oxide layer, an oxyhydroxide layer, and/or a hydroxide layer formed on a surface of the inorganic fine particle; and
   a hydrophobic group organically modifying the surface of the inorganic fine particle via the oxide layer, the oxyhydroxide layer, and/or the hydroxide layer;
   wherein at least one or more atoms selected from nitrogen, carbon, sulfur, and phosphorus are detected by elemental analysis.

3.   The organically modified inorganic fine particle according to claim 2,
   wherein the oxide layer, the oxyhydroxide layer, and/or the hydroxide layer has a thickness of 1 atomic layer or more and 100 nm or less.

4.   The organically modified inorganic fine particle according to claim 2 or 3,
   wherein molecules organically modifying the surface of the inorganic fine particle cover 1% or more of the surface of the inorganic fine particle.

FIG. 1

Reaction mechanism

FIG. 2

FIG. 3

Before treatment

After treatment

States of AlN particles before and after oxidation treatment
(upper: SEM, lower: oxygen mapping)

## FIG. 4

Before treatment

After treatment

States of AlN particles before and after oxidation treatment (elemental spectra)

FIG. 5

IR spectra

IR spectra of fine particles obtained by organic modification

FIG. 6

| Before treatment | After treatment |

States of TiN particles before and after oxidation treatment
(upper: SEM, lower: oxygen mapping)

FIG. 7

Before treatment                                    After treatment

States of TiN particles before and after oxidation treatment (elemental spectra)

FIG. 8

IR spectra of fine particles obtained by organic modification

FIG. 9

Before treatment

After treatment

States of Si₃N₄ particles before and after oxidation treatment
(upper: SEM, lower: oxygen mapping)

FIG. 10

Before treatment                                    After treatment

States of $Si_3N_4$ particles before and after oxidation treatment (elemental spectra)

FIG. 11

IR spectra of fine particles obtained by organic modification

FIG. 12

Before treatment

After treatment

States of SiC particles (primary average particle diameter: 2 to 3 μm) before
and after oxidation treatment (upper: SEM, lower: oxygen mapping)

FIG. 13

Before treatment                                    After treatment

States of SiC particles (primary average particle diameter: 2 to 3 μm) before and
after oxidation treatment (elemental spectra)

FIG. 14

IR spectra

IR spectra of fine particles obtained by organic modification

FIG. 15

Before treatment                                                    After treatment

States of SiC particles (primary average particle diameter: $\leq 38$ μm) before and
after oxidation treatment (upper: SEM, lower: oxygen mapping)

FIG. 16

Before treatment                                        After treatment

States of SiC particles (primary average particle diameter: ≤ 38 μm) before and after
oxidation treatment (elemental spectra)

FIG. 17

IR spectra

IR spectra of fine particles obtained by organic modification

## FIG. 18

(A) Comparative Example 5-1

(B) Comparative Example 5-2

(C) Example 5

States of BN particles before and after oxidation treatment (FT-IR spectra)

FIG. 19

States of BN particles before and after oxidation treatment (X-ray diffraction)

FIG. 20

(A) Example 5A (modification with oleylamine, 350°C)

(B) Partially enlarged view of circled part in (A)

FIG. 21

(A) Example 5B (modification with oleylamine, 380°C)

(B) Partially enlarged view of circled part in (A)

Europäisches
Patentamt

European
Patent Office

Office européen
des brevets

# EUROPEAN SEARCH REPORT

**Application Number**

EP 22 20 4092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 034952 A (TOYOTA IND CORP) 21 February 2013 (2013-02-21) * the whole document * * abstract * | 1-4 | INV.<br>C01B21/064<br>C04B35/565<br>C04B35/58<br>C04B35/581 |
| X | US 2015/065340 A1 (HATAKEYAMA YOSHIHARU [JP] ET AL) 5 March 2015 (2015-03-05) * paragraphs [0039] - [0043], [0299] - [0301], [0315] - [0386] * | 1-4 | C04B35/584<br>C01G1/12<br>C09C1/28<br>C09C1/36<br>C09C1/40 |
| X | JP 2012 121744 A (UNIV TOHOKU; DENKI KAGAKU KOGYO KK) 28 June 2012 (2012-06-28) * the whole document * * abstract * | 1-4 | C09C3/00<br>C09C3/06<br>C09C3/08<br>B01J3/00 |

**TECHNICAL FIELDS SEARCHED (IPC)**

C01B
C04B
C01G
C09C
B01J

The present search report has been drawn up for all claims

| Place of search | Date of completion of the search | Examiner |
|---|---|---|
| The Hague | 18 September 2023 | Marino, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 4092

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2023

| Patent document cited in search report | | Publication date | Patent family member(s) | | Publication date |
|---|---|---|---|---|---|
| JP 2013034952 | A | 21-02-2013 | NONE | | |
| US 2015065340 | A1 | 05-03-2015 | CN | 102822098 A | 12-12-2012 |
| | | | CN | 104341787 A | 11-02-2015 |
| | | | JP | 5612953 B2 | 22-10-2014 |
| | | | JP | 5881306 B2 | 09-03-2016 |
| | | | JP | 6058250 B2 | 11-01-2017 |
| | | | JP | 2011235280 A | 24-11-2011 |
| | | | JP | 2011236111 A | 24-11-2011 |
| | | | JP | 2011236203 A | 24-11-2011 |
| | | | JP | 2011236399 A | 24-11-2011 |
| | | | JP | 2011236412 A | 24-11-2011 |
| | | | KR | 20130040820 A | 24-04-2013 |
| | | | US | 2013109770 A1 | 02-05-2013 |
| | | | US | 2015065340 A1 | 05-03-2015 |
| | | | US | 2016222194 A1 | 04-08-2016 |
| | | | US | 2017189895 A1 | 06-07-2017 |
| JP 2012121744 | A | 28-06-2012 | JP | 5722016 B2 | 20-05-2015 |
| | | | JP | 2012121744 A | 28-06-2012 |

EPO FORM P0459

For more details about this annex : see Official Journal of the European Patent Office, No. 12/82

**EP 4 265 565 A1**

REFERENCES CITED IN THE DESCRIPTION

**Patent documents cited in the description**

- JP 3925932 B